# EUROPEAN PATENT SPECIFICATION

(11) **EP 2 771 587 B1**
(45) Date of publication and mention of the grant of the patent: **18.07.2018**
(21) Application number: 12783923.1
(22) Date of filing: 26.10.2012
(51) Int. Cl.: F16D 1/05, F16D 1/116

(54) **SHAFT CONNECTION**
WELLENVERBINDUNG
RACCORDEMENT D'ARBRE

(30) Priority: 27.10.2011 GB 201118625
(43) Date of publication of application: 03.09.2014
(73) Proprietor: Jaguar Land Rover Limited, Coventry, Warwickshire CV3 4LF (GB)
(72) Inventor: TAVENER, Stuart, Coventry Warwickshire CV3 4LF (GB)
(74) Representative: Rogers, Ivan Mark
(86) International application number: PCT/EP2012/071242
(87) International publication number: WO 2013/060833

(56) References cited:
- DE-A1- 2 328 567
- DE-A1- 19 913 693
- DE-A1- 19 939 729
- DE-A1-102006 006 008
- DE-A1-102009 007 957
- FR-A- 1 310 713
- GB-A- 2 199 102
- JP-A- 2 085 522
- US-A- 2 564 019
- US-A- 3 754 781
- US-A- 4 373 753
- US-A1- 2005 229 734

## Description

This invention relates to a shaft connection, and particularly but not exclusively to a connection adapted to transmit torque, such as in a driveline of a vehicle. Aspects of the invention relate to a connection and to a vehicle.

Many kinds of torque transmitting shaft connection are known. For example a motor vehicle driveline may include a propeller shaft comprising an axially immovable connection at one end; the other end may plunge to accommodate axle movement, but this invention is not concerned with that end.

A typical connection at the axially fixed end comprises circular flanges of the propeller shaft and the next driveline component, which may be an input shaft of an axle. The propeller shaft is usually a steel tube to which the associated flange is attached by welding. The flange of the input shaft may be a separate annular component immovably fixed to the input shaft by a nut or the like. Each flange is provided with a plurality of equi-spaced holes on a diameter thereof, and the flanges are coupled by nuts and bolts, sometimes with spring or plain washers. One coupled, the flanges are immovable both axially and in relative rotation, and can effectively transmit torque.

This kind of flange connection is extremely well-known, and has the advantage of being well understood, of simple construction, and straightforward to assemble and dismantle. After removal of the nuts and bolts, the flange connection generally separates without difficulty.

It is of great importance that such a connection, of whatever kind, should transmit torque without relative rotational movement play or relative axial movement. Any such movement causes noise and vibration, and may lead to failure of the connection in service.

Flange connections also have disadvantages. The flange must be provided and attached to the components to be joined. Generally four or more nut/bolt pairs are required to be assembled, and moreover the flange must be aligned and held in alignment whilst the first bolts are inserted. The nuts and bolts constitute loose parts which may become mislaid or lost. Upon assembly each nut/bolt pair must be reliably torqued to the correct tightness.

Flanged connections are relatively heavy, and moreover have a relatively large diameter which is generally significantly larger than the diameter of the shafts to be connected. Reduction in flange size is not easy because the bolts require to be of a certain diameter for strength, and access is required for tools and hands. As a consequence the clearance between the shafts and neighbouring vehicle parts is relatively great.

Finally, upon making a connection, it is not unusual to have to rotate the shafts in order to give access to all of the nut/bolt pairs. This may require special measures if the shafts are substantially immovable in the rest condition.

The disadvantages described above are typical of a motor vehicle propeller shaft connection. The problems are generally applicable to all such flange connections whether in a motor vehicle driveline, or elsewhere.

US2005/0229734 discloses a motor pinion having a shaft accommodating section for placement on and fastening to a motor shaft in rotationally rigid fashion, the shaft accommodating section having a wall for encompassing the motor shaft. At least a part of the wall is fashioned so as to be constrictable for restraining the motor shaft. In mounting, the wall is compressed against the motor shaft by a nut, the wall having an increasing external circumference.

US4373753 discloses a tension spring finger connector provided for offshore pipelines. The connector makes use of a metal seal which is reusable and does not require a diver for subsea connection operations. The holding components of the connector are colleted spring fingers and a combination drivelock ring. Sealing is accomplished with a combination of a seal ring and a flexible cantilevered support.

FR1310713 discloses a method of assembling tubular bodies between them in a sealed manner and without any play.

What is required is an improved shaft connection that can ameliorate some or all of the disadvantages of a flanged shaft connection.

According to one aspect of the invention there is provided a torque transmitting shaft connection comprising a drive member and a driven member on a drive axis, one of said members comprising a collet adapted to receive the other of said members, the connection further comprising a closure member movable along said axis being provided to close the collet to grip the other member for transmission of torque, characterised in that the connection further comprises a resilient member located between the drive member and the driver member, the resilient member being located between the fingers of the collet and the other of said members.

In such an arrangement both the collet and closure member may have a relatively low profile so that the diameter of the connection is substantially less than a prior art flanged joint. The closure member may be unitary, and may replace the plurality of nuts and bolts. The resilient member provides resistance against movement of the drive member with respect to the driven member, in particular radial movement with respect to the drive axis.

The resilient member may be formed from a plastic material, rubber, silicon, metal or any suitable material which is capable of elastic deformation.

Typically, the first resilient member is located between the collet of one member and the other of said members. It may be that the resilient member is located between the fingers of the collet of one member and the other of said members.

It may be that the resilient member comprises an O ring located around the other of said members.

It may be that at least one of the drive member and the driven member comprise a recess adapted to receive the resilient member. The recess may comprise a groove. The recess may be arcuate. The recess may be circumferential around the drive member or the driven member.

It may be that a plurality of the fingers of the collet comprise a recess adapted to receive the resilient member.

It may be that the connection further comprises a plurality of resilient members located between the drive member and the driven member.

It may be that the other of said members has a circumferential groove, the collet fingers each having an inwardly directed protrusion for engagement in said groove.

Within the scope of this application it is envisaged that all of the various aspects, embodiments examples, features and alternatives set out in the preceding paragraphs, in the claims and/or in the following description and drawings may be taken independently or in any combination thereof. For example, features described in connection with one embodiment are applicable to all embodiments unless there is incompatibility of features.

Embodiments of the present invention will now be described, by way of example only, with reference to the accompanying drawings in which:-
Fig. 1 is an illustration of a prior art flange connection; and
Fig. 2 is an axial section through a shaft connection according to an embodiment of the invention.

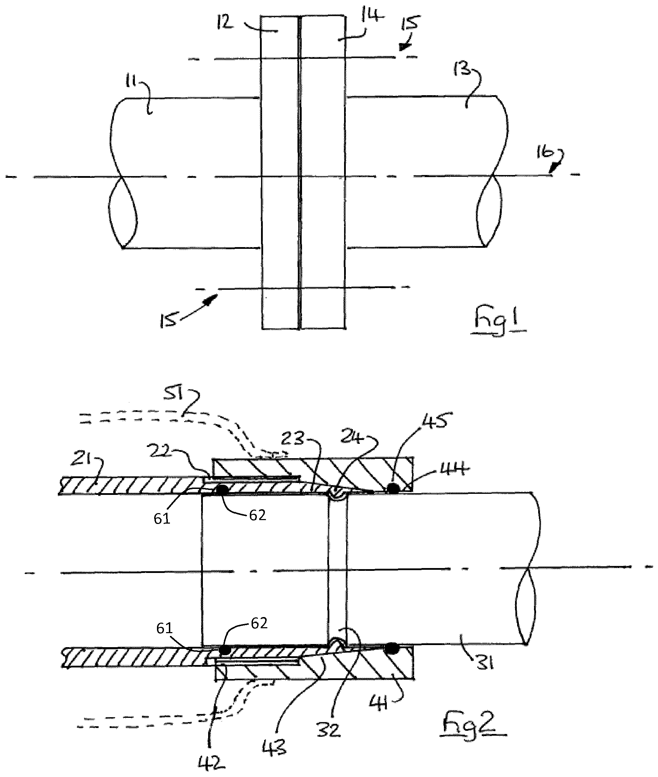

With reference to Fig. 1, a known propeller shaft connection comprises a tubular propeller shaft (11) having a circular flange (12) welded to the end thereof. An input shaft (13) of an axle (not shown) has a circular flange (14) attached thereto, typically by a spline or keyway arrangement. The flanges are pierced in a regular fashion on centrelines (15) to accommodate nuts and bolts whereby the flange can be tightly coupled for rotation about axis (16) without relative axial or rotational movement.

In order to couple the flanged connection of Fig. 1, the components must be supported in rotational and axial alignment whilst the bolts are inserted. Surrounding structure may require rotation of the connection to permit all of the nut/bolt pairs to be tightened individually.

With reference to Fig. 2, the connection of the invention is illustrated. A tubular propeller shaft (21) is directly machined at the free end to define an external screw thread (22) and a plurality of tapered collet fingers (23). The number of collet fingers is not material, but may for example be between three and six. The radially external face of the fingers has a straight taper, as illustrated, which merges immediately into the screw thread at the major diameter thereof.

On the inner side each finger (23) has a radially inwardly directed projection (24), which may be formed by machining, by upsetting or in any other convenient manner. Each projection may extend around the full circumferential arc of a respective finger, or may comprise single or multiple protrusions. As illustrated each projection has a generally arcuate form in the axial direction.

Although an integrally machined collet is described, it could of course be a separate component attached in any suitable manner to the drive shaft.

A driven shaft (31) comprises a plain diameter with a single circumferential groove (32) of arcuate form. Such a groove can be easily machined along with other radial features (not shown) of the shaft.

The collet further comprises a recess 61 in the form of a circumferential groove, into which is fitted an O ring 62 which then encloses the driven shaft 31. The O ring is formed from a resilient material which is capable of elastic deformation. The depth of the recess 61 is less than the diameter of the O ring 62 such that when the connection is assembled the O ring is elastically deformed and exerts pressure on the inner surface of the recess 61 and on the driven shaft 31.

Once the connection is assembled, in order the drive member or the drive member to move radially with respect to the drive axis, the drive member must also tilt with respect to the driven member. This motion is minimised where the collet is tightly fitted, however over time sufficient "play" may develop to allow radial movement. The O ring tends to resist such motion, since it would require a further deformation of the O ring. Hence radial movement is minimised.

A collet nut (41) surrounds the shaft (31) and includes both a threaded portion (42) for engagement with the screw thread (22), and an internally tapered portion (43) for engagement with the external tapered faces of the collet fingers. A plain diameter portion (44) at the opposite end to the threaded portion (42) is internally grooved to contain an O ring seal (45). For assembly purposes the nut (41) may be loosely retained on the shaft (31) by any suitable means.

In the unassembled condition, the collet fingers (23) are arranged to be a light resilient sliding fit on the shaft (31). The arcuate form of the projections (24) ensures that the shaft (31) can be easily inserted, but with slight resistance to axial movement. Upon reaching the groove (32), the projections spring radially inwardly to hold the components against relative movement, and in this condition the shafts (21, 31) are retained without the need for other measures.

The nut (41) is then slid axially along the shaft (31), and the threaded portion (42) engaged with the screw thread (22). Upon tightening, the nut draws the collet fingers (23) tightly onto the shaft (31) to give a shaft connection without relative axial or rotational movement. The seal (45) prevents ingress of moisture, which may cause corrosion. The projections are designed to fit tightly within the groove (32) in the assembled condition.

Disassembly is the reverse procedure and the collet fingers spring outwardly due to their inherent resilience; it will be appreciated that the nut can be fully disengaged without the connection falling apart, as would happen in a flanged joint when the last bolt is removed.

Fastening and unfastening of the nut is possible from one side (such as the underside of a vehicle), and other components can be mounted more closely to the joint. A substantial weight saving is possible, up to 1.5 kg, and balancing of the propeller shaft may be obviated since the prior art welded connection is eliminated.

Should it be necessary, the external surface of the nut may be used to locate an external boot or the like for shrouding the connection, as indicated by the dotted line (51). Such a boot may be clamped externally and and/or accommodated in a groove of the nut, and is desirable if, for example, the connection is adjacent a device within which oil or grease must be retained. One example of such a device is an articulating drive joint of a front-wheel drive vehicle.

In the example described, the component material is steel. However it will be understood that other materials are possible dependent upon the nature and duty of the connection. The skilled man will be able to define sizes and dimensions suitable for transmission of the desired torque, which in a motor vehicle may be in the range 200-1000 Nm.

In a second embodiment, the collet may comprise further recesses, into each of which is fitted a further O ring. The further O rings can then provide additional resistance to radial movement.

## Claims

1. A torque transmitting shaft connection comprising a drive member (21) and a driven member (31) on a drive axis, one of said members comprising a collet having a plurality of fingers (23) adapted to receive the other of said members,
the connection further comprising a closure member (41) movable along said axis being provided to close the collet to grip the other member for transmission of torque,
**characterised in that** the connection further comprises a resilient member (62) located between the drive member and the driven member, the resilient member being located between the fingers of the collet and the other of said members.

2. A connection according to claim 1, wherein the resilient member comprises an O ring (62) located around the other of said members.

3. A connection according to any preceding claim, wherein at least one of the drive member (21) and the driven member (31) comprise a recess (61) adapted to receive the resilient member (62).

4. A connection according to claim 3, wherein a plurality of the fingers (23) of the collet comprise a recess (61) adapted to receive the resilient member (62).

5. A connection according to any preceding claim, wherein the connection comprises a plurality of resilient members (62) located between the drive member and the driven member.

6. A connection according to any preceding claim, the other of said members having a circumferential groove (32), the collet fingers each having an inwardly directed protrusion (24) for engagement in said groove,

7. A connection according to claim 6, wherein each said protrusion (24) is adjacent the tip of a respective finger (23).

8. A connection according to claim 6 or claim 7, wherein in the relaxed condition, the radially innermost diameter defined by the protrusions (23) is less than the diameter of the member to be received therein.

9. A connection according to any preceding claim, wherein one of said members (21) is tubular, and said collet is integrally formed therewith.

10. A connection according to any preceding claim, wherein the fingers (23) of the collet are tapered.

11. A connection according to any preceding claim, wherein the closure member is a nut (41).

12. A connection according to claim 11 as dependent upon claim 10, wherein said nut is internally tapered to mate with said fingers (23).

13. A connection according to claim 11 or claim 12, wherein said collet is externally threaded (22) at an axial distance from the inward protrusions of the collet fingers (23).

14. A connection according to any of claims 11-13, wherein said nut (41) includes an axial portion of constant internal diameter (44) around the other of said members.

15. A connection according to claim 14, wherein said axial portion includes a recess adapted to receive a seal (45).

16. A connection according to claim 15, wherein said recess comprises a circumferential channel intermediate the axial ends of the nut (41).

17. A connection according to claim 16, wherein said channel is adapted to contain an O ring (45).

18. A connection according to any of claims 6-8 or claims 9-17 as dependent upon claims 6-8, wherein said circumferential groove is arcuate.

19. A connection according to claim 18, wherein the protrusions (24) of said collet fingers (23) are arcuate.

20. A shaft having a connection as claimed in any preceding claim.

21. A vehicle having a driveshaft comprising a shaft as claimed in claim 20.

## Patentansprüche

1. Drehmomentübertragende Wellenverbindung, ein Antriebselement (21) und ein angetriebenes Element (31) auf einer Antriebsachse umfassend, wobei eines der Elemente eine Spannzange mit mehreren Fingern (23) umfasst, die angepasst sind, das andere der Elemente aufzunehmen,
wobei die Verbindung ferner ein entlang der Achse bewegbares Verschlusselement (41) umfasst, das zum Schließen der Spannzange bereitgestellt ist, um das andere Element zur Drehmomentübertragung einzuklemmen,
**dadurch gekennzeichnet, dass** die Verbindung ferner ein elastisches Element (62) umfasst, das zwischen dem Antriebselement und dem angetriebenen Element angeordnet ist, wobei das elastische Element zwischen den Fingern der Spannzange und dem anderen der Elemente angeordnet ist.

2. Verbindung nach Anspruch 1, wobei das elastische Element einen O-Ring (62) umfasst, der um die anderen der Elemente herum angeordnet ist.

3. Verbindung nach einem der vorhergehenden Ansprüche, wobei das Antriebselement (21) und/oder das angetriebene Element (31) eine Vertiefung (61) umfasst, die angepasst ist, um das elastische Element (62) aufzunehmen.

4. Verbindung nach Anspruch 3, wobei mehrere der Finger (23) der Spannzange eine Vertiefung (61) umfassen, die angepasst ist, das elastische Element (62) aufzunehmen.

5. Verbindung nach einem der vorhergehenden Ansprüche, wobei die Verbindung mehrere elastische Elemente (62) umfasst, die zwischen dem Antriebselement und dem angetriebenen Element angeordnet sind.

6. Verbindung nach einem der vorhergehenden Ansprüche, wobei das andere der Elemente eine umlaufende Kerbe (32) aufweist, wobei die Spannzangenfinger jeweils einen nach innen gerichteten Vorsprung (24) zum Ineingriffnehmen der Kerbe aufweisen.

7. Verbindung nach Anspruch 6, wobei jeder Vorsprung (24) neben der Spitze eines jeweiligen Fingers (23) ist.

8. Verbindung nach Anspruch 6 oder 7, wobei der radial im Innersten liegende Durchmesser, der durch die Vorsprünge (23) definiert ist, im entspannten Zustand kleiner ist als der Durchmesser des Elements, das darin aufzunehmen ist.

9. Verbindung nach einem der vorhergehenden Ansprüche, wobei eines der Elemente (21) röhrenförmig ist und die Spannzange einstückig damit ausgebildet ist.

10. Verbindung nach einem der vorhergehenden Ansprüche, wobei die Finger (23) der Spannzange verjüngt sind.

11. Verbindung nach einem der vorhergehenden Ansprüche, wobei das Verschlusselement eine Mutter (41) ist.

12. Verbindung nach Anspruch 11, wenn abhängig von Anspruch 10, wobei die Mutter innen verjüngt ist, um mit den Fingern (23) in Eingriff zu treten.

13. Verbindung nach Anspruch 11 oder 12, wobei die Spannzange in einem Achsenabstand von den nach innen gerichteten Vorsprüngen der Spannzangenfinger (23) außen mit einem Gewinde (22) versehen ist.

14. Verbindung nach einem der Ansprüche 11-13, wobei die Mutter (41) einen Achsenabschnitt eines gleichbleibenden Innendurchmessers (44) um das andere der Elemente herum enthält.

15. Verbindung nach Anspruch 14, wobei der Achsenabschnitt eine Vertiefung enthält, die angepasst ist, eine Dichtung (45) aufzunehmen.

16. Verbindung nach Anspruch 15, wobei die Vertiefung einen umlaufenden Kanal umfasst, der zwischen den Achsenenden der Mutter (41) liegt.

17. Verbindung nach Anspruch 16, wobei der Kanal angepasst ist, einen O-Ring (45) zu enthalten.

18. Verbindung nach einem der Ansprüche 6-8 oder 9-17, wenn abhängig von Ansprüchen 6-8, wobei die umlaufende Kerbe bogenförmig ist.

19. Verbindung nach Anspruch 18, wobei die Vorsprünge (24) der Spannzangenfinger (23) bogenförmig sind.

20. Welle mit einer Verbindung nach einem der vorhergehenden Ansprüche.

21. Fahrzeug mit einer Antriebswelle, die eine Welle nach Anspruch 20 umfasst.

## Revendications

1. Raccord d'arbre de transmission de couple comprenant un organe d'entraînement (21) et un organe entraîné (31) sur un axe d'entraînement, l'un desdits organes comprenant une pince de serrage ayant une pluralité de doigts (23) adaptée pour recevoir l'autre desdits organes,
le raccord comprenant en outre un organe de fermeture (41) mobile le long dudit axe qui est prévu pour fermer la pince de serrage pour saisir l'autre organe pour une transmission de couple,
**caractérisé en ce que** le raccord comprend en outre un organe résilient (62) situé entre l'organe d'entraînement et l'organe entraîné, l'organe résilient étant situé entre les doigts de la pince de serrage et l'autre desdits organes.

2. Raccord selon la revendication 1, dans lequel l'organe résilient comprend un joint torique (62) situé autour de l'autre desdits organes.

3. Raccord selon l'une quelconque des revendications précédentes, dans lequel au moins l'un de l'organe d'entraînement (21) et de l'organe entraîné (31) comprend un évidement (61) adapté pour recevoir l'organe résilient (62).

4. Raccord selon la revendication 3, dans lequel une pluralité des doigts (23) de la pince de serrage comprend un évidement (61) adapté pour recevoir l'organe résilient (62).

5. Raccord selon l'une quelconque des revendications précédentes, dans lequel le raccord comprend une pluralité d'organes résilients (62) situés entre l'organe d'entraînement et l'organe entraîné.

6. Raccord selon l'une quelconque des revendications précédentes, l'autre desdits organes ayant une gorge circonférentielle (32), les doigts de pince de serrage ayant chacun une saillie dirigée vers l'intérieur (24) pour un enclenchement dans ladite gorge.

7. Raccord selon la revendication 6, dans lequel chacune desdites saillies (24) est adjacente au bout d'un doigt (23) respectif.

8. Raccord selon la revendication 6 ou la revendication 7, dans lequel dans l'état relâché, le diamètre radialement le plus intérieur défini par les saillies (23) est inférieur au diamètre de l'organe devant y être reçu.

9. Raccord selon l'une quelconque des revendications précédentes, dans lequel l'un desdits organes (21) est tubulaire, et ladite pince de serrage est formée d'un seul tenant avec celui-ci.

10. Raccord selon l'une quelconque des revendications précédentes, dans lequel les doigts (23) de la pince de serrage sont effilés.

11. Raccord selon l'une quelconque des revendications précédentes, dans lequel l'organe de fermeture est un écrou (41).

12. Raccord selon la revendication 11 lorsqu'elle dépend de la revendication 10, dans lequel ledit écrou est effilé à l'intérieur pour s'apparier avec lesdits doigts (23).

13. Raccord selon la revendication 11 ou la revendication 12, dans lequel ladite pince de serrage est filetée à l'extérieur (22) à une distance axiale des saillies vers l'intérieur des doigts de pince de serrage (23).

14. Raccord selon l'une quelconque des revendications 11 à 13, dans lequel ledit écrou (41) comporte une portion axiale de diamètre interne constant (44) autour de l'autre desdits organes.

15. Raccord selon la revendication 14, dans lequel ladite portion axiale comporte un évidement adapté pour recevoir un joint d'étanchéité (45).

16. Raccord selon la revendication 15, dans lequel ledit évidement comprend un canal circonférentiel intermédiaire entre les extrémités axiales de l'écrou (41).

17. Raccord selon la revendication 16, dans lequel ledit canal est adapté pour contenir un joint torique (45).

18. Raccord selon l'une quelconque des revendications 6 à 8 ou des revendications 9 à 17 lorsqu'elles dépendent des revendications 6 à 8, dans lequel ladite gorge circonférentielle est arquée.

19. Raccord selon la revendication 18, dans lequel les saillies (24) desdits doigts de pince de serrage (23) sont arquées.

20. Arbre comportant un raccord tel que revendiqué à l'une quelconque des revendications précédentes.

21. Véhicule comportant un arbre d'entraînement comprenant un arbre tel que revendiqué à la revendication 20.
